# EUROPÄISCHE PATENTSCHRIFT

(11) **EP 4 033 640 B1**
(45) Veröffentlichungstag und Bekanntmachung des Hinweises auf die Patenterteilung: **01.11.2023**
(21) Anmeldenummer: 22151739.4
(22) Anmeldetag: 17.01.2022
(51) Int. Cl.: H02J 50/12

(54) **VERFAHREN ZUM BETREIBEN EINER VORRICHTUNG ZUM DRAHTLOSEN ÜBERTRAGEN VON ENERGIE IN RICHTUNG EINES ELEKTRISCHEN VERBRAUCHERS MITTELS INDUKTIVER KOPPLUNG, VORRICHTUNG UND SYSTEM**
METHOD FOR OPERATING A DEVICE FOR WIRELESS TRANSMISSION OF ENERGY IN THE DIRECTION OF AN ELECTRICAL CONSUMER BY MEANS OF INDUCTIVE COUPLING, DEVICE AND SYSTEM
PROCÉDÉ DE FONCTIONNEMENT D'UN DISPOSITIF DE TRANSMISSION SANS FIL DE L'ÉNERGIE VERS UN CONSOMMATEUR ÉLECTRIQUE AU MOYEN D'UN COUPLAGE INDUCTIF, DISPOSITIF ET SYSTÈME

(30) Priorität: 22.01.2021 DE 102021200584
(43) Veröffentlichungstag der Anmeldung: 27.07.2022
(73) Patentinhaber: E.G.O. Elektro-Gerätebau GmbH, 75038 Oberderdingen (DE)
(72) Erfinder: Egenter, Christian, 75015 Bretten (DE); Müller, Max-Felix, 75038 Oberderdingen (DE)
(74) Vertreter: Patentanwälte Ruff, Wilhelm, Beier, Dauster & Partner mbB

(56) Entgegenhaltungen:
- EP-A1- 3 255 756
- DE-A1-102011 077 085

## Beschreibung

Die Erfindung betrifft ein Verfahren zum Betreiben einer Vorrichtung zum drahtlosen Übertragen von Energie in Richtung eines elektrischen Verbrauchers mittels induktiver Kopplung, eine Vorrichtung und ein System. Stand der Technik ist in EP 3 255 756 A1 oder DE 10 2011 077085 A1 gezeigt.

Der Erfindung liegt die Aufgabe zugrunde, ein Verfahren zum Betreiben einer Vorrichtung zum drahtlosen Übertragen von Energie in Richtung eines elektrischen Verbrauchers mittels induktiver Kopplung, eine Vorrichtung und ein System zur Verfügung zu stellen, die einen möglichst zuverlässigen und flexiblen Betrieb ermöglichen.

Das Verfahren dient zum Betreiben einer Vorrichtung zum drahtlosen Übertragen von Energie in Richtung eines elektrischen Verbrauchers mittels induktiver Kopplung, auch als Wireless Power Transfer, WPT, bezeichnet. Hinsichtlich der Grundlagen zu WPT sei auch auf die einschlägige Fachliteratur verwiesen. Bevorzugt wird die Vorrichtung gemäß dem WPC (Wireless Power Consortium) Ki (Cordless Kitchen) Verfahren betrieben.

Die Vorrichtung zum drahtlosen Übertragen von Energie in Richtung eines elektrischen Verbrauchers mittels induktiver Kopplung kann auch als Transmitter bezeichnet werden und der elektrische Verbraucher kann als Receiver bezeichnet werden.

Die Vorrichtung weist einen herkömmlichen einphasigen oder mehrphasigen Gleichrichter zum Erzeugen einer Gleichspannung aus einer insbesondere sinusförmigen Netzspannung auf.

Die Vorrichtung weist einen aus der Gleichspannung gespeisten Wechselrichter auf. Der Wechselrichter kann beispielsweise ein Halbbrücken-Wechselrichter oder ein Vollbrücken-Wechselrichter sein.

Die Vorrichtung weist eine herkömmliche mittels des Wechselrichters angesteuerte Spule oder Transmitterspule auf, die dazu ausgebildet ist, zum Übertragen der Energie ein magnetisches Wechselfeld zu erzeugen. Hierzu wird mittels des Wechselrichters ein, insbesondere periodisches, Ansteuersignal, insbesondere in Form einer Ansteuerspannung, erzeugt und die Spule oder ein die Spule aufweisender Schwingkreis wird mit dem Ansteuersignal angesteuert bzw. beaufschlagt. Das Ansteuersignal weist typisch einen von einem Leistungs-Sollwert abhängigen bzw. zu dem Leistungs-Sollwert passenden Arbeitspunkt auf. Ein Arbeitspunkt bezeichnet hierbei insbesondere eine oder mehrere Eigenschaften des Ansteuersignals, beispielsweise Amplitude, Tastgrad und/oder Frequenz des Ansteuersignals.

Das Verfahren weist die folgenden Schritte auf.

Es wird eine Übertragungsfunktion ermittelt bzw. gemessen, wobei die Übertragungsfunktion eine mittels der Vorrichtung in Richtung des elektrischen Verbrauchers übertragbare elektrische Leistung in Abhängigkeit von der Frequenz des mittels des Wechselrichters erzeugten Ansteuersignals beschreibt, insbesondere für einen vorgegebenen konstanten Tastgrad des Ansteuersignals, beispielsweise 50 %. Die Übertragungsfunktion kann beispielsweise für einen Frequenzbereich zwischen 10 kHz bis 70 kHz, bevorzugt zwischen 20 kHz bis 50 kHz, ermittelt werden.

Das Ermitteln der Übertragungsfunktion über der Frequenz erfolgt in bzw. während Zeitbereichen, in denen ein Betrag der Netzspannung sein Maximum annimmt. Die Zeitbereiche können zentrisch oder nicht-zentrisch um die jeweiligen Betragsmaxima der Netzspannung gewählt sein. Erfindungsgemäß wird die Übertragungsfunktion über der Frequenz folglich in Zeitbereichen ermittelt, in denen auch die den Wechselrichter versorgende Gleichspannung ihr Maximum aufweist. Daher weist die mittels des Wechselrichters zur Messung der Übertragungsfunktion erzeugte Wechselspannung ihr Amplitudenmaximum auf. Dies entspricht auch bei nichtlinearem Übertragungsverhalten der für die Leistungsübertragung relevanten Aussteuerung, da das Gros der übertragenen Leistung in diesem Arbeitspunkt übertragen wird.

In einer Ausführungsform weisen die Zeitbereiche eine Dauer zwischen 0,7 ms und 3 ms auf. Die Netzspannung von öffentlichen Netzen weist einen sinusförmigen Verlauf mit 50 Hz bzw. 60 Hz auf. Der Sinus variiert in dem erfindungsgemäß gewählten Zeitbereich um sein Maximum herum nur um wenige Prozent. Da Energiespeicher im Zwischenkreis nach dem Gleichrichter zur Versorgung der Messung aus Kostengründen üblicherweise klein dimensioniert sind, erfolgt die erfindungsgemäße Messung gestützt durch die Netzspannung. Die oben genannten Dauern der Zeitbereiche haben sich zum Ermitteln der Übertragungsfunktion als optimal herausgestellt.

In einer Ausführungsform wird in einem jeweiligen Zeitbereich die Übertragungsfunktion für 5 bis 50 verschiedene Frequenzen ermittelt. Typisch sind mehrere Zeitbereiche erforderlich, bis die Übertragungsfunktion über den gesamten interessierenden Frequenzbereich ermittelt ist.

In einer Ausführungsform wird zum Ermitteln der Übertragungsfunktion eine Impedanz der Spule über der Frequenz ermittelt und/oder eine Impedanz eines die Spule aufweisenden Schwingkreises über der Frequenz ermittelt, und/oder eine Leistung ermittelt, die in die Spule und/oder in den die Spule aufweisenden Schwingkreis eingespeist wird und/oder der Schwingkreisstrom zu einem Umschaltzeitpunkt des Wechselrichters gemessen. Die Impedanzermittlung erfolgt beispielsweise durch Anregen der Spule/des Schwingkreises mit einem mittels des Wechselrichters erzeugten Ansteuersignals in Form einer im Wesentlichen rechteckförmigen Anregungsspannung mit bekannter (Mess-) Frequenz und Messen eines sich einstellenden Stroms, wobei beispielsweise eine Amplitude einer sich einstellenden Stromschwingung und eine Phase der sich einstellenden Stromschwingung bezogen auf die Anregungsspannung zur Impedanzmessung herangezogen werden können. Strom- und Spannungsverlauf während einer Messperiode können in konstanten Zeitabständen gemessen werden, die Grundschwingungsanteile von Strom und Spannung über beispielsweise eine Fourier-Analyse extrahiert werden und damit die Impedanz sowie ihr Phasenwinkel bestimmt werden. Die (Mess-) Frequenz wird dann schrittweise so lange verändert, bis der gesamte interessierende Frequenzbereich überdeckt ist. Im Übrigen sei im Hinblick auf die Impedanzmessung auch auf die einschlägige Fachliteratur verwiesen. Die eingespeiste Leistung kann beispielsweise herkömmlich durch Spannungs- und Strommessung und geeignete Verrechnung der gemessenen Größen bestimmt werden. Im Übrigen sei insoweit ebenfalls auf die einschlägige Fachliteratur verwiesen.

In einer Ausführungsform wird/werden zum Ermitteln der Übertragungsfunktion der Betrag und/oder die Phase der ermittelten Impedanz der Spule bzw. des die Spule aufweisenden Schwingkreises berücksichtigt.

In einer Ausführungsform wird basierend auf der ermittelten Übertragungsfunktion eine Arbeitsfrequenz ermittelt, mit der die Spule angesteuert wird. Die Arbeitsfrequenz ist typisch diejenige Frequenz, die losgelöst von der Messung der Übertragungsfunktion zum drahtlosen Übertragen der Energie in Richtung des elektrischen Verbrauchers, d.h. zur eigentlichen Leistungsübertragung, eingestellt wird.

Die erfindungsgemäße Vorrichtung dient zum drahtlosen Übertragen von Energie in Richtung eines elektrischen Verbrauchers mittels induktiver Kopplung und ist zur Durchführung des oben beschriebenen Verfahrens ausgebildet.

Die Vorrichtung weist auf: einen Gleichrichter zum Erzeugen einer Gleichspannung aus einer Netzspannung, einen aus der Gleichspannung gespeisten Wechselrichter, eine mittels des Wechselrichters angesteuerte Spule, mittels der zum Übertragen der Energie ein magnetisches Wechselfeld erzeugbar ist, und eine Steuereinheit, die dazu ausgebildet ist, den Wechselrichter derart anzusteuern, dass ein oben beschriebenes Verfahren ausgeführt wird.

Das erfindungsgemäße System weist eine oben beschriebene Vorrichtung zum drahtlosen Übertragen von Energie in Richtung eines elektrischen Verbrauchers mittels induktiver Kopplung auf einen elektrischen Verbraucher auf.

Bei den nachfolgenden Erläuterungen wird die Vorrichtung zum drahtlosen Übertragen von Energie als Transmitter bezeichnet und der elektrische Verbraucher als Receiver bezeichnet. Entsprechend wird die Spule der Vorrichtung bzw. des Transmitters als Transmitterspule bezeichnet und die korrespondierende Spule des elektrischen Verbrauchers bzw. Receivers als Receiverspule bezeichnet.

Der Wechselrichter der Vorrichtung zur Ansteuerung der Transmitterspule weist bekannte, von der Netzspannung abhängige Eingangsgrößen auf. Ein Wechselrichter in Form einer Halbbrücke wirkt beispielsweise wie eine Spannungsquelle, wobei der Strom durch die Transmitterspule sowie die sich ergebende Leistung abhängig von der resultierenden Impedanz sind, die sich aus einer Kombination von Impedanz der Transmitterspule bzw. des die Transmitterspule enthaltenden Schwingkreises, Kopplung zwischen Transmitterspule und Receiverspule sowie der Receiver-Impedanz ergibt. Im Allgemeinen sind diese Impedanzen und die daraus resultierende übertragbare Leistung frequenzabhängig. Die Frequenzabhängigkeit der resultierenden Impedanz bzw. der sich daraus ergebenden übertragbaren Leistung wird als Überragungsfunktion bezeichnet.

Aus der Übertragungsfunktion lassen sich wichtige Informationen für die Ansteuerung der Transmitterspule generieren. Da die Übertragungsfunktion die Leistung im Arbeitsfrequenzbereich des Transmitters darstellt, können mögliche sinnvolle und/oder effiziente Arbeitsfrequenzen für die Transmitteransteuerung abgeleitet werden. Die Auswertung der Übertragungsfunktion erlaubt es das aktuelle Übertragungssystem zu charakterisieren, beispielsweise ob es einen oder zwei Maxima der Leistungsübertragung aufweist. Auch lässt sich eine bevorzugte Startfrequenz sowie effiziente Arbeitsfrequenz für den Betrieb der Schaltmittel im Transmitter passend zu einer vorgegebenen Soll-Leistung auswählen, usw.

Die Übertragungsfunktion kann als frequenzabhängige Leistung, bzw. Strom, bzw. Spannung oder als frequenzabhängige Impedanz oder daraus abgeleitete Größen beschrieben und gemessen werden. Dabei gilt, dass die Leistungsübertragung über der Frequenz ein lokales Maximum aufweist, bei der die Impedanz ein lokales Minimum aufweist, da der Transmitter wie beschrieben aus einer Spannungsquelle versorgt wird.

Die Erfindung beschreibt ein Verfahren zum Messen der Übertragungsfunktion durch den Transmitter. Dabei wird erfindungsgemäß berücksichtigt, dass die Messung im Wesentlichen mit der Maximalspannung der versorgenden Netzspannung durchgeführt wird. Auch soll das Verfahren sowohl vor dem Starten der Leistungsübertragung als auch im laufenden Betrieb durchführbar sein, um so Veränderungen der Übertragungsfunktion bei Impedanzänderungen der Last nachführen zu können, beispielsweise durch Drehzahländerung einer Motorlast oder Änderungen der Kopplung, beispielsweise durch Verschieben des Receivers.

Erfindungsgemäß wird die Übertragungsfunktion eines WPT Systems durch den Transmitter unabhängig von kommunizierten Daten des Receivers gemessen.

Die Speisespannung des Transmitters wird im Wesentlichen aus der Netzspannung erzeugt, so dass keine relevanten Energiespeicher notwendig sind. Die Messung wird im Wesentlichen mit einer Speisespannung nahe dem Maximum der Netzspannung durchgeführt und die Ansteuerfrequenz wird während der Messung in Schritten verändert, was auch als Frequency Sweep bezeichnet wird.

Die Messung wird um das Netzspannungsmaximum herum durchgeführt und dauert typisch nicht länger als 2,0 ms, bevorzugt nicht länger als 1,2 ms.

Die Änderung zwischen zwei aufeinanderfolgenden Frequenzschritten ist bevorzugt kleiner als 2,5 kHz, besonders bevorzugt kleiner 1,2 kHz, um ein erneutes Einschwingen auf der nächsten Frequenz zu vermeiden. Nicht bei jedem Frequenzschritt ist eine Messung erforderlich.

Die Messung ist vor dem Start der eigentlichen Leistungsübertragung aber auch während einer laufenden Leistungsübertragung möglich.

Der Frequency Sweep vor der Leistungsübertragung startet beispielsweise mit der höchsten vorgesehenen Arbeitsfrequenz. Ein Einschwingen von mindestens 2 Perioden, bevorzugt 5 Perioden, der aktuellen Messfrequenz kann abgewartet werden, bevor die Messung startet. Während der Messung wird die Messfrequenz schrittweise reduziert.

Der Frequency Sweep während der Leistungsübertragung startet beispielsweise mit der (vorbestimmten) Messfrequenz, die am wenigsten über der aktuellen Betriebsfrequenz liegt. Die Messung kann ohne Einschwingen starten. Die Messfrequenz wird schrittweise erhöht, bis die höchste vorgesehene Arbeitsfrequenz erreicht ist. Anschließend wird auf die erste Messfrequenz zurückgeschaltet und ein Einschwingen von mindestens 2 Perioden, bevorzugt 5 Perioden, abgewartet, bis die Messung fortgesetzt wird. Anschließend wird die Messfrequenz schrittweise reduziert.

Die rechnerische Bestimmung der Übertragungsfunktion und/oder eines Phasenwinkels/Ausschaltstroms wird während der Messung selbst, spätestens während der Messung der nächsten Periode durchgeführt. Wird das Überschreiten von vordefinierten Abbruchkriterien erkannt, dann wird der Frequency Sweep abgebrochen. Abbruchkriterien können ein Leistungsniveau, ein positives dP/df (d.h. eine niederfrequente Seite eines linken Peaks) oder ein negativer Ausschaltstrom (d.h. ein positiver Einschaltstrom) sein.

Findet eine Messung bei einer laufenden Leistungsübertragung statt, kann die Leistung über die gesamte Messdauer integriert werden, die Abweichung zur Soll-Leistung ermittelt werden und in der nächsten oder übernächster AC-Halbwelle entsprechend korrigiert werden, damit die mittlere Leistung des Receivers unabhängig von der Messung konstant bleibt.

Der Start des Frequency Sweeps kann mit dem Receiver synchronisiert werden, d.h. der Receiver misst seine Lastspannung während des Frequency Sweeps,

Die Erfindung wird nachfolgend unter Bezugnahme auf die Zeichnungen detailliert beschrieben. Hierbei zeigt:
- Fig. 1: hoch schematisch ein System mit einer Vorrichtung zum drahtlosen Übertragen von Energie in Richtung eines elektrischen Verbrauchers mittels induktiver Kopplung und einen mittels der Vorrichtung versorgten elektrischen Verbraucher,
- Fig. 2: eine exemplarische Übertragungsfunktion, die eine mittels der Vorrichtung in Richtung des elektrischen Verbrauchers übertragbare elektrische Leistung über der Frequenz charakterisiert, und
- Fig. 3: eine die Vorrichtung speisende sinusförmige Netzspannung sowie zugehörige Zeitbereiche, während denen die Übertragungsfunktion ermittelt wird.

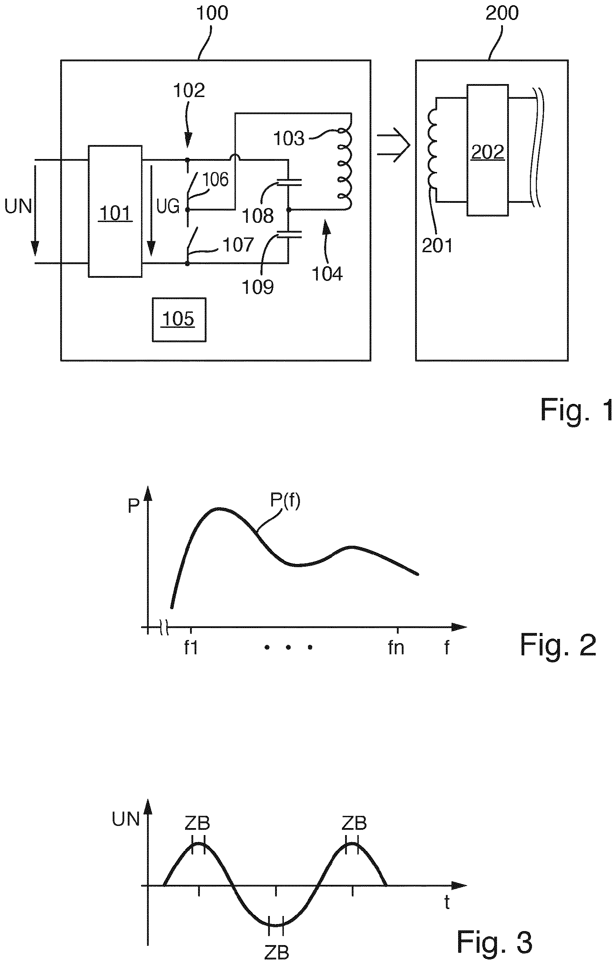

Fig. 1 zeigt hoch schematisch ein System mit einer Vorrichtung 100 zum drahtlosen Übertragen von Energie oder elektrischer Leistung in Richtung eines elektrischen Verbrauchers 200 mittels induktiver Kopplung und einen elektrischen Verbraucher 200. Derartige Systeme sind grundsätzlich bekannt und werden auch als WTP-Systeme bezeichnet.

Die Vorrichtung 100 weist einen herkömmlichen Gleichrichter 101 zum Erzeugen einer Gleichspannung UG aus einer einphasigen sinusförmigen Netzspannung UN auf. Der Gleichrichter 101 kann beispielsweise als Brückengleichrichter realisiert sein.

Die Vorrichtung 100 weist weiter einen aus der Gleichspannung UG gespeisten Wechselrichter 102 auf. Der Wechselrichter 102 weist zwei in Reihe zwischen den Ausgang des Gleichrichters 101 eingeschleifte Halbleiterschaltmittel 106 und 107 auf.

Die Vorrichtung 100 weist weiter eine mittels des Wechselrichters 102 angesteuerte Spule 103 auf, mittels der zum Übertragen der Energie ein magnetisches Wechselfeld erzeugbar ist.

Die Spule 103 ist induktiv mit einer Empfängerspule 201 des elektrischen Verbrauchers 200 gekoppelt, wobei der Empfängerspule 201 ein Gleichrichter 202 und weitere nicht näher dargestellte Komponenten des elektrischen Verbrauchers 200 nachgeschaltet sind. Im Übrigen sei insoweit auch auf die einschlägige Fachliteratur verwiesen.

Die Vorrichtung 100 weist weiter zwei in Reihe zwischen den Ausgang des Gleichrichters 101 eingeschleifte Kondensatoren 108 und 109 auf. Die Spule 103 ist zwischen einen Verbindungsknoten der Halbleiterschaltmittel 106 und 107 und einen Verbindungsknoten der Kondensatoren 108 und 109 eingeschleift. Im Übrigen sei hinsichtlich dieser an sich bekannten Topologie auch auf die einschlägige Fachliteratur verwiesen.

Die Vorrichtung 100 weist weiter eine Steuereinheit 105 auf, beispielsweise in Form eines herkömmlichen Mikroprozessors, die/der den Betrieb der Vorrichtung 100 wie nachfolgend beschrieben steuert.

Bezugnehmend auf Fig. 2 ermittelt die Vorrichtung 100 eine Übertragungsfunktion P(f), wobei die Übertragungsfunktion P(f) eine mittels der Vorrichtung 100 in Richtung des elektrischen Verbrauchers 200 übertragbare elektrische Leistung P über der Frequenz f charakterisiert.

Bezugnehmend Fig. 3 wird das Ermitteln der Übertragungsfunktion P(f) in Zeitbereichen ZB durchgeführt, in denen ein Betrag der Netzspannung UN sein Maximum annimmt. Die Zeitbereiche ZB weisen eine Dauer zwischen 0,7 ms und 3 ms auf.

In einem jeweiligen Zeitbereich ZB wird die Übertragungsfunktion P(f) für 5 bis 50 verschiedene Frequenzen ermittelt. Insgesamt kann die Übertragungsfunktion P(f) über mehrere Zeitbereiche ZB hinweg für eine Anzahl n von diskreten (Mess-) Frequenzen f1 bis fn ermittelt werden, wobei die diskreten (Mess-) Frequenzen f1 bis fn einen Frequenzbereich von beispielsweise 20 kHz bis 50 kHz abdecken. Eine Schrittweite von aufeinanderfolgenden (Mess-) Frequenzen kann beispielsweise maximal 1,2 kHz betragen. Die Schrittweite kann konstant oder veränderlich sein.

Zum Ermitteln der Übertragungsfunktion P(f) kann eine Impedanz der Spule 103 über der Frequenz f ermittelt werden, eine Impedanz eines die Spule 103 aufweisenden Schwingkreises 104 über der Frequenz ermittelt werden, und/oder eine Leistung ermittelt werden, die in die Spule 103 und/oder in den die Spule 103 aufweisenden Schwingkreis 104 eingespeist wird. Zum Ermitteln der Übertragungsfunktion P(f) kann der Betrag und/oder die Phase der ermittelten Impedanz berücksichtigt werden. Als weitere wichtige Kenngröße kann der Schwingkreisstrom zu einem Umschaltzeitpunkt des Wechselrichters gemessen werden.

Die Impedanz- bzw. Leistungsmessung erfolgt beispielsweise durch Anregen der Spule 103 bzw. des Schwingkreises 104 mit einer mittels des Wechselrichters 102 erzeugten im Wesentlichen rechteckförmigen Anregungsspannung mit bekannter (Mess-) Frequenz und bekannter oder gemessener Amplitude und Messen eines sich einstellenden Stroms, beispielsweise in die Spule 103 bzw. den Schwingkreis 104, wobei eine Amplitude einer sich einstellenden Stromschwingung und eine Phase der sich einstellenden Stromschwingung bezogen auf die Anregungsspannung zur Impedanzmessung herangezogen werden können. Die (Mess-) Frequenz wird dann schrittweise so lange verändert, bis der gesamte interessierende Frequenzbereich überdeckt ist.

Basierend auf der ermittelten Übertragungsfunktion P(f) kann eine Arbeitsfrequenz ermittelt werden, mit der die Spule 103 zum drahtlosen Übertragen der Energie in Richtung des elektrischen Verbrauchers 200 angesteuert wird.

## Patentansprüche

1. Verfahren zum Betreiben einer Vorrichtung (100) zum drahtlosen Übertragen von Energie in Richtung eines elektrischen Verbrauchers (200) mittels induktiver Kopplung, wobei die Vorrichtung aufweist:
- einen Gleichrichter (101) zum Erzeugen einer Gleichspannung (UG) aus einer Netzspannung (UM),
- einen aus der Gleichspannung (UG) gespeisten Wechselrichter (102),
- eine mittels des Wechselrichters (102) angesteuerte Spule (103), mittels der zum Übertragen der Energie ein magnetisches Wechselfeld erzeugbar ist,
wobei das Verfahren die Schritte aufweist:
- Ermitteln einer Übertragungsfunktion (P(f)), wobei die Übertragungsfunktion (P(f)) eine mittels der Vorrichtung (100) in Richtung des elektrischen Verbrauchers (200) übertragbare elektrische Leistung (P) über der Frequenz (f) charakterisiert, **dadurch gekennzeichnet,**
- **dass** das Ermitteln der Übertragungsfunktion (P(f)) über der Frequenz (f) in Zeitbereichen (ZB) durchgeführt wird, in denen ein Betrag der Netzspannung (UN) sein Maximum annimmt.

2. Verfahren nach Anspruch 1, **dadurch gekennzeichnet, dass**
- die Zeitbereiche (ZB) eine Dauer zwischen 0,7 ms und 3 ms aufweisen.

3. Verfahren nach einem der vorhergehenden Ansprüche, **dadurch gekennzeichnet, dass**
- in einem jeweiligen Zeitbereich (ZB) die Übertragungsfunktion (P(f)) für 5 bis 50 verschiedene Frequenzen ermittelt wird.

4. Verfahren nach einem der vorhergehenden Ansprüche, **dadurch gekennzeichnet, dass**
- zum Ermitteln der Übertragungsfunktion (P(f)) eine Impedanz der Spule (103) über der Frequenz ermittelt wird, und/oder eine Impedanz eines die Spule (103) aufweisenden Schwingkreises (104) über der Frequenz ermittelt wird, und/oder eine Leistung ermittelt wird, die in die Spule (103) und/oder in den die Spule (103) aufweisenden Schwingkreis (104) eingespeist wird, und/oder der Schwingkreisstrom zu einem Umschaltzeitpunkt des Wechselrichters (102) gemessen wird.

5. Verfahren nach einem der vorhergehenden Ansprüche, **dadurch gekennzeichnet, dass**
- zum Ermitteln der Übertragungsfunktion (P(f)) der Betrag und/oder die Phase der ermittelten Impedanz berücksichtigt wird.

6. Verfahren nach einem der vorhergehenden Ansprüche, **dadurch gekennzeichnet, dass**
- basierend auf der ermittelten Übertragungsfunktion eine Arbeitsfrequenz ermittelt wird, mit der die Spule (103) zum drahtlosen Übertragen der Energie in Richtung des elektrischen Verbrauchers (200) angesteuert wird.

7. Vorrichtung (100) zum drahtlosen Übertragen von Energie in Richtung eines elektrischen Verbrauchers (200) mittels induktiver Kopplung, die zur Durchführung des Verfahrens nach einem der vorhergehenden Ansprüche ausgebildet ist, aufweisend:
- einen Gleichrichter (101) zum Erzeugen einer Gleichspannung (UG) aus einer Netzspannung (UN),
- einen aus der Gleichspannung (UG) gespeisten Wechselrichter (102),
- eine mittels des Wechselrichters (102) angesteuerte Spule (103), mittels der zum Übertragen der Energie ein magnetisches Wechselfeld erzeugbar ist, und
- eine Steuereinheit (105), die dazu ausgebildet ist, den Wechselrichter (102) derart anzusteuern, dass ein Verfahren nach einem der vorhergehenden Ansprüche ausgeführt wird.

8. System, aufweisend:
- eine Vorrichtung (100) zum drahtlosen Übertragen von Energie in Richtung eines elektrischen Verbrauchers (200) mittels induktiver Kopplung nach Anspruch 7, und
- einen elektrischen Verbraucher (200).

## Claims

1. A method for operating a device (100) for wireless transmission of energy in the direction of an electrical consumer (200) by means of inductive coupling, wherein the device has:
- a rectifier (101) for generating a DC voltage (UG) from a mains voltage (UM),
- an inverter (102) fed from the DC voltage (UG),
- a coil (103) controlled by means of the inverter (102), by means of which coil an alternating magnetic field is generatable for transmitting the energy,
wherein the method has the steps:
- determination of a transmission function (P(f)), wherein the transmission function (P(f)) characterizes an electrical power (P), transmissible by means of the device (100) in the direction of the electrical consumer (200), over the frequency (f), **characterized in that** the determination of the transmission function (P(f)) over the frequency (f) is performed in time ranges (ZB) in which the amount of the mains voltage (UN) is at its maximum.

2. The method according to claim 1, **characterized in that**
- the time ranges (ZB) have a duration of between 0.7 ms and 3 ms.

3. The method according to any of the preceding claims, **characterized in that**
- the transmission function (P(f)) is determined for 5 to 50 different frequencies in a respective time range (ZB).

4. The method according to any of the preceding claims, **characterized in that**
- for determination of the transmission function (P(f)) an impedance of the coil (103) over the frequency is determined, and/or an impedance of a resonant circuit (104) having the coil (103) over the frequency is determined, and/or a power which is fed into the coil (103) and/or into the resonant circuit (104) having the coil (103) is determined, and/or the resonant circuit current is measured at a switchover time of the inverter (102).

5. The method according to any of the preceding claims, **characterized in that**
- for determination of the transmission function (P(f)) the amount and/or the phase of the impedance determined is taken into account.

6. The method according to any of the preceding claims, **characterized in that**
- based on the transmission function determined, an operating frequency is determined with which the coil (103) is driven for wireless transmission of energy in the direction of the electrical consumer (200).

7. A device (100) for wireless transmission of energy in the direction of an electrical consumer (200) by means of inductive coupling, which is configured to carry out the method according to any of the preceding claims, having:
- a rectifier (101) for generating a DC voltage (UG) from a mains voltage (UN),
- an inverter (102) fed from the DC voltage (UG),
- a coil (103) controlled by means of the inverter (102), by means of which coil an alternating magnetic field is generatable for transmitting the energy, and
- a control unit (105) which is configured to drive the inverter (102) such that a method according to any of the preceding claims is performed.

8. A system, having:
- a device (100) for wireless transmission of energy in the direction of an electrical consumer (200) by means of inductive coupling according to claim 7, and
- an electrical consumer (200).

## Revendications

1. Procédé de fonctionnement d'un dispositif (100) de transmission d'énergie sans fil vers un consommateur électrique (200) au moyen d'un couplage inductif, sachant que le dispositif présente :
- un redresseur (101) pour générer une tension continue (UG) à partir d'une tension secteur (UM),
- un onduleur (102) alimenté par la tension continue (UG),
- une bobine (103) excitée par l'onduleur (102), au moyen de laquelle un champ magnétique alternatif est générable pour transmettre l'énergie,
sachant que le procédé présente les étapes suivantes :
- détermination d'une fonction de transmission (P(f)), sachant que la fonction de transmission (P(f)) exprime une puissance électrique (P) pouvant être transmise au moyen du dispositif (100) vers le consommateur électrique (200) par rapport à la fréquence (f), **caractérisé en ce que** la détermination de la fonction de transmission (P(f)) par rapport à la fréquence (f) est réalisée sur des intervalles de temps (ZB) dans lesquels une valeur de la tension secteur (UN) atteint son maximum.

2. Procédé selon la revendication 1, **caractérisé en ce que**
- les intervalles de temps (ZB) présentent une durée comprise entre 0,7 ms et 3 ms.

3. Procédé selon l'une des revendications précédentes, **caractérisé en ce que**
- dans un intervalle de temps respectif (ZB), la fonction de transmission (P(f)) est déterminée pour 5 à 50 fréquences différentes.

4. Procédé selon l'une des revendications précédentes, **caractérisé en ce que**
- pour déterminer la fonction de transmission (P(f)), une impédance de la bobine (103) est déterminée par rapport à la fréquence, et/ou une impédance d'un circuit oscillant (104) présentant la bobine (103) est déterminée par rapport à la fréquence, et/ou qu'une puissance est déterminée qui est injectée à la bobine (103) et/ou au circuit oscillant (104) présentant la bobine (103), et/ou que le circuit oscillant est mesuré à un moment de commutation de l'onduleur (102).

5. Procédé selon l'une des revendications précédentes, **caractérisé en ce que**
- la valeur et/ou la phase de l'impédance déterminée sont prises en compte pour déterminer la fonction de transmission (P(f)).

6. Procédé selon l'une des revendications précédentes, **caractérisé en ce que**
- se basant sur la fonction de transmission déterminée, une fréquence de travail est déterminée avec laquelle la bobine (103) est excitée pour la transmission d'énergie sans fil vers le consommateur électrique (200).

7. Dispositif (100) pour la transmission d'énergie sans fil vers un consommateur électrique (200) au moyen du couplage inductif qui est conçu pour réaliser le procédé selon l'une des revendications précédentes, présentant :
- un redresseur (101) pour générer une tension continue (UG) à partir d'une tension secteur (UN),
- un onduleur (102) alimenté par la tension continue (UG),
- une bobine (103) excitée au moyen de l'onduleur (102), au moyen de laquelle un champ magnétique alternatif est générable pour transmettre l'énergie, et
- une unité de commande (105) qui est conçue pour exciter l'onduleur (102) de telle sorte que soit réalisé un procédé selon l'une des revendications précédentes.

8. Système, présentant :
- un dispositif (100) de transmission d'énergie sans fil vers un consommateur électrique (200) au moyen du couplage inductif selon la revendication 7, et
- un consommateur électrique (200).
